# EUROPEAN PATENT SPECIFICATION

(11) **EP 4 483 564 B1**
(45) Date of publication and mention of the grant of the patent: **28.01.2026**
(21) Application number: 23702156.3
(22) Date of filing: 31.01.2023
(51) Int. Cl.: H04L 47/11, H04L 47/12, H04L 67/56, H04L 67/101, H04L 67/50, H04L 67/1001, H04L 67/563, H04W 28/08

(54) **SERVICE REQUEST HANDLING**
HANDHABUNG VON DIENSTANFRAGEN
GESTION DE DEMANDE DE SERVICE

(30) Priority: 25.02.2022 EP 22382167
(43) Date of publication of application: 01.01.2025
(73) Proprietor: Telefonaktiebolaget LM Ericsson (publ), 164 83 Stockholm (SE)
(72) Inventor: BARTOLOME RODRIGO, Maria Cruz, 28189 Torremocha de Jarama Madrid (ES); VAZQUEZ, Emiliano Merino, 28916 Madrid (ES)
(74) Representative: Ericsson
(86) International application number: PCT/EP2023/052324
(87) International publication number: WO 2023/160971

(56) References cited:
- WO-A1-2022/025987
- WO-A1-2022/035695
- US-A1- 2022 060 547

## Description

### Technical Field

This disclosure relates to methods, nodes and systems in a communications network. More particularly but non-exclusively, the disclosure relates to service requests sent from a client node to a server node through a service communication proxy (SCP) node.

### Background

Various techniques exist for handling a request for a service (or service request) in a network. A service request is generally from a consumer of the service ("service consumer") to a producer of the service ("service producer"). For example, a service request may be from a client node of a service consumer, to a service instance operating on a server node of a service producer. Client nodes and server nodes can communicate directly or indirectly. This is referred to as direct communication and indirect communication respectively. In the case of indirect communication, the client node and the server node (or the service instance operating on the server node) may communicate via a service communication proxy (SCP) node.

The SCP node is a 5GC Network Function which provides centralized capabilities such as SBI routing, Network Function (NF) discovery and selection, failover, message screening, etc. SCP is used in indirect routing scenarios as described in 3GPP TS 23.501 v17.3.0 which sets out four different systems, or "models", for handling service requests from client nodes. Models A and B use direct communication, while models C and D use indirect communication. Document US 2022/060547 A1 discloses a method involving forwarding a discovery request message to a network function (NF) repository function (NRF) by a service communications proxy (SCP). A list of service profiles of producer NF instances capable of providing a service identified in the discovery or service request message is created at the NRF. Service profiles of the producer NF instance corresponding to an endpoint and service name combination identified as unhealthy in the request message are excluded from the list. A discovery response message including the list of profiles is forwarded to the SCP by the NF NRF and the SCP.

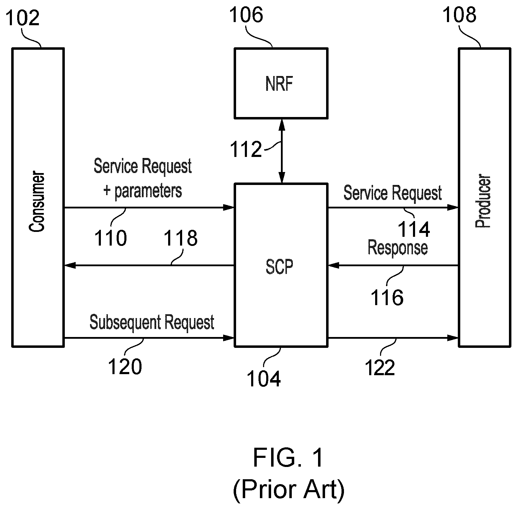

Fig. 1 illustrates Model D service request handling whereby a service request 110 is sent indirectly from a client node 102 to a service instance on a server node 108 via a first service communication proxy (SCP) node 104 in message 114. A response 116 to the service request is sent from the service instance on the server node 108 to SCP 104 and sent on to the client node in message 118. Similarly, any subsequent service requests 120 are sent indirectly from the client node to the server node via the SCP 104 in message 122. The system illustrated in Figure 1 also comprises an NRF node 106.

A discovery and selection process is undertaken to discover client nodes to which to send the service request. In model D illustrated in Fig. 1, the client node 102 does not carry out the discovery or selection process. Rather, client node 102 adds any necessary discovery and selection parameters (required to find a suitable service instance) to the service request that it sends to the SCP 104. The SCP 104 uses the request address and the discovery and selection parameters in the service request to route the service request to a suitable service instance. The SCP 104 can perform discovery 112 with the NRF node 106. As part of the discovery process, the NRF 106 sends to the SCP 104 profiles for one or more service instances on the server node(s) 108, and based on the received profile(s), the SCP selects a service instance to which to send the service request.

In model D, the SCP discovers the target service instance, as indicated in 3GPP TS 23.502:
*If Indirect Communication with delegated discovery is used, the NF service consumer sends the request to the SCP and provides within the service request to the SCP the discovery and selection parameters necessary to discover and select a NF service producer.*

For the fifth generation core (5GC), from Release 16, the SCP is included as a network element to allow indirect communication between a client node (NF service consumer) and a service instance on a server node (NF service producer).

3GPP TS 29.500 version 17.5.0: "5G System; Technical Realization of Service Based Architecture; Stage 3 Procedures for the 5G System (5GS)*"* has defined a mechanism "Overload Control based on OCI Header" (see clause 6.4.3). In brief, in this mechanism, a Server node (NFc for regular requests, or NFp for notifications) may detect it is getting overloaded and provide overload information to the Client node (e.g. NF service consumer node) by means of the inclusion of Overload Control Information (OCI) headers, where a percentage of traffic abatement is requested. In this same clause, it is indicated that in case of indirect communication, the SCP shall forward OCI headers to the client node, and it is up to the client node to act accordingly.

A new CR has also been described in CR C4-220394: "Avoidance of (re)selection of the target NF for Indirect Communication*",* including a new Rel-17 HTTP header that is required to provide information from the client node to the SCP in order to allow the SCP to perform reselection based on overload information of the destinations.

As noted above, the client node (NFc for regular requests, NFp for notification requests) when there is indirect communication with delegated discovery (aka model D) does not perform initial selection of a service instance to execute required service. On the contrary, it is the SCP that is responsible for performing this initial selection, based on the information provided in the request by the client node.

This means that the client node, when processing and sending an initial request to the SCP (model D), does not know the target service instance that will be selected by the SCP. This means that the client node (NFc) is unable to perform any throttling towards a certain destination, even though the OCI header(s) the client node has received may indicate some destinations are suffering overload.

As an alternative, the client node may provide to the SCP, information about service instances that should not be selected by the SCP, with the aim that the SCP will avoid these destinations when performing an initial selection or reselection.

Note that for subsequent requests, once a Location is received in the response of the initial request, the NFc may be able to identify the destination the SCP has selected, extracting apiRoot from the Location URI. Apart from that, if the SCP performs initial selection or reselection, the SCP shall include the sbi-producer-id header in the response, and optionally Binding header. With the information in sbi-producer-id header (specifically with the Rel-17 update), the NFc is able to identify the NF(service)instanceld and (if applicable) NF(service) Setld for the selected (by SCP) destination. In this case, the NFc is able to perform throttling for subsequent requests. This information is stored in the NFc, for this "Session context" (this interaction for that initial requests and related subsequent requests), and then it could be applied for all subsequent requests.

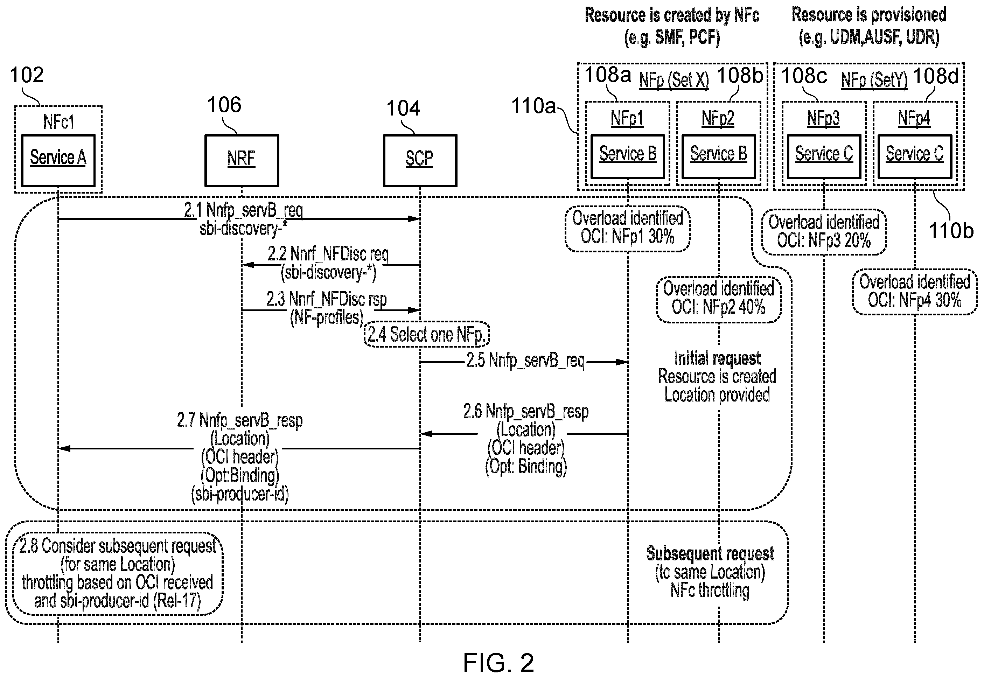

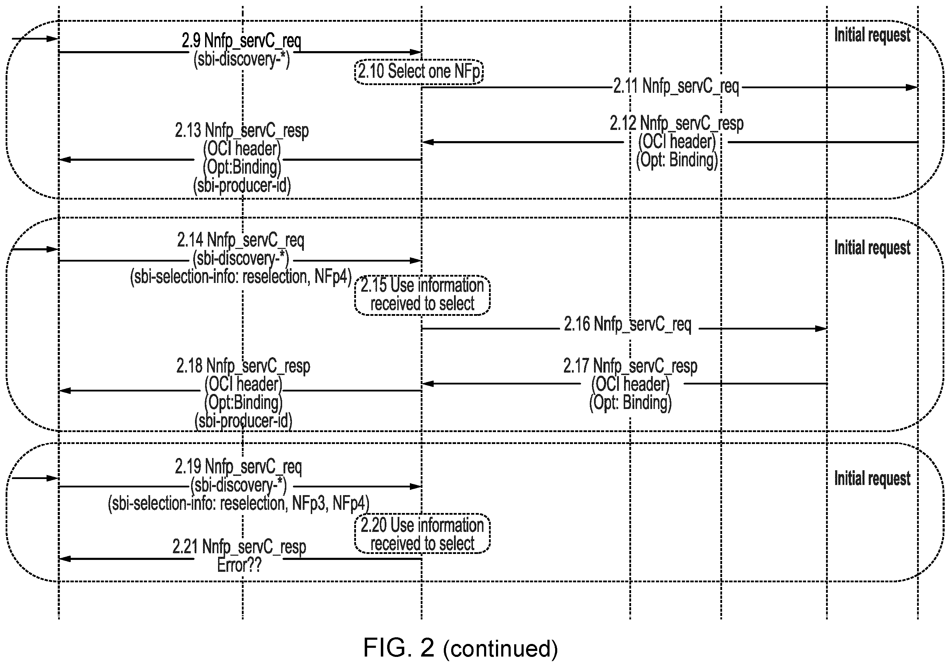

Fig. 2 illustrates service request handling of a service request from a first client node 102, a NRF 106, a SCP node 104, and a plurality server nodes 108a, 108b, 108c and 108d operating service instances of services C and B. In this example the client node is a NF on a consumer node (NFc) and the server node is a NF on a producer node NFp. Note however that the scenario in Fig 2 applies equally to the handling of notification requests whereby the both the client node and the server node are NFps.

The plurality of service instances are grouped into two sets (or groups) NFp1, NFp(Set X) and NFP(Set Y), as illustrated in Fig. 2.
Examples of various service request handling scenarios are described in the following steps:
Step 2.1. Initial request, with indirect communication model D. In this example, in service B resources are created by a Client. Example of a service B is Access and Mobility Policy Control Service in PCF.
Step 2.2,2.3. (Optional) If profiles are not cached by the SCP, then Discovery based on received information could be performed to find corresponding NFp profiles.
Step 2.4. SCP selects one NFp among the candidates returned in step 3
Step 2.5. SCP sends the request to the selected NFp.
Step 2.6. Successful response from the NFp. If a resource is created, then Location (to the created resource) is included in response. Optionally sbi-binding may be included, indicating the preferences for reselection if this selected NFp fails, e.g. NF(service)Set. And, in case this NFp1 has identified an overload situation it has to include an OCI header with an indication of the expected reduction of traffic, in this example, it is 30% reduction required. Step 2.7. The SCP forwards the response to the Client. If the SCP has initially selected or reselected (like step 4) the SCP could include Sbi-Producer-Id header, identifying the selected NFp (NFp (service) instance Id, and including NF(service)Set).
Step 2.8. In this example, another request has to be sent for the same resource (i.e. identified by the Location received), this is what is referred to herein as a subsequent request. Then the NFc is aware of the destination the SCP selected, based on received information in Sbi-Producer-Id (in case SCP performs initial selection or reselection) or in Location (for initial request). The NFc checks the Overload information received in OCI header for the destination (NF(service) instance and/or NF(service)Set) and consider traffic abatement accordingly. For example, in this case this request may be considered to be abated, as part of the 30% that is to be abated.
Step 2.9. A request for a service C is sent. In this example, service C has pre-created/configured resources, that is, the resources are not created by the Client. Then the Client uses the key of the resource to access that. An example of that resource key is SUPI, or other subscriber Id, while an example of service C is Subscriber Data Management service in UDM.

Being an initial request, the NFc does not know which target will be selected by SCP, then NFc is unable to proceed with overload abatement. In this case, since the NFc is the responsible for the overload abatement, it has to provide the SCP overload information, for this the sbi-selection-info header is proposed in 3GPP to be included, where NFc indicates some NF(service)instance and/or NF(service)Set that could be excluded from the selection to be performed by the SCP. In this case, for service C, the NFc does not have any overload information.
Step 2.10. SCP selects one NFp. In this example, it is assumed that NFp profiles are cached, so steps 2.2 and 2.3 are not required (for simplicity)
Steps 2.11, 2.12, 2.13: Similar to steps 2.5, 2.6, 2.7, but in this case, since the resource is not created, a Location is not returned.
Step 2.14: A new request for service C. This is considered as initial request (for model D), as long as an sbi-target-apiroot is not included (this header is constructed by the NFc based on the Location received, if a resource is created). In this case, Client has some overload information related to this Service. In order to enforce the require abatement, the NFc counts on the SCP, for that the NFc indicates to the SCP that NFp4 could not be selected.
Step 2.15: The SCP shall take the received information into account for selection. In this case, NFp4 is not selected.
Step 2.16, 2.17, 2.18: similar to steps 2.11, 2.12 and 2.13.

### Summary

As indicated in Step 2.19 of Fig. 2, if same network traffic continues, after a few selections avoiding indicated overloaded targets, all possible NF (service) instances can become overloaded. In this example, this point is reached when NFp3 and NFp4 are suffering overload, then if the NFc indicates in the sbi-selection-info that NFp3 and NFp4 could not be selected, then there are no further service producer nodes that can be selected and an error occurs.

In existing systems, the behaviour described in steps 2.19 to 2.21 can end up being repeated, e.g. in a looped manner. This effectively results in the requests being throttled. However, whilst this is one way to throttle requests, but they will be arbitrarily throttled, that is, not controlled by application logic. Throttling in this way is disadvantageous as it cannot take into account factors such as the priority of the service requests or optimize end to end procedures by throttling some operations but not others. Furthermore, the NFc 102 is unaware of the origin of the failure as the error produced is often a non-dedicated (or non-specific error), e.g. the error may not provide information about the overload situation of the network, but may just be a generic error about e.g. NF failure or NF unavailability. It is an object of embodiments herein to address some of these issues.

Thus, according to a first aspect there is a first service communication proxy, SCP node in a communications network, wherein the first SCP node is configured to operate as a SCP between a client node and one or more server nodes operating service instances of a first service. The first SCP node comprises: a memory comprising instruction data representing a set of instructions; and a processor configured to communicate with the memory and to execute the set of instructions. The set of instructions, when executed by the processor, cause the processor to: receive a first service request from the client node, requesting the first service; and send service information to the client node, the service information comprising an indication of the service instances of the first service that are operating on the one or more server nodes.

According to a second aspect there is a first service communication proxy, SCP node in a communications network, wherein the first SCP node is configured to operate as a SCP between a client node and one or more server nodes operating service instances of a first service. The first SCP is operative to: receive a first service request from the client node, requesting the first service; and send service information to the client node, the service information comprising an indication of the service instances of the first service that are operating on the one or more server nodes.

According to a third aspect there is a method in a first service communication proxy, SCP node in a communications network, wherein the first SCP node is configured to operate as a SCP between a client node and one or more server nodes operating service instances of a first service. The method comprises: receiving a first service request from the client node, requesting the first service; and sending service information to the client node, the service information comprising an indication of the service instances of the first service that are operating on the one or more server nodes.

According to a fourth aspect there is a client node in a communications network, the communications network comprising a first service communication proxy, SCP, node configured to operate as a SCP between the client node and one or more server nodes operating service instances of a first service. The client node comprises: a memory comprising instruction data representing a set of instructions; and a processor configured to communicate with the memory and to execute the set of instructions. The set of instructions, when executed by the processor, cause the processor to: send a first service request to the first SCP node, requesting the first service; and receive service information from the first SCP node, the service information comprising an indication of the service instances of the first service that are operating on the one or more server nodes.

According to a fifth aspect there is a client node in a communications network, the communications network comprising a first service communication proxy, SCP, node configured to operate as a SCP between the client node and one or more server nodes operating service instances of a first service. The client node is operative to: send a first service request to the first SCP node, requesting the first service; and receive service information from the first SCP node, the service information comprising an indication of the service instances of the first service that are operating on the one or more server nodes.

According to a sixth aspect there is a method performed by a client node in a communications network, the communications network comprising a first service communication proxy, SCP, node configured to operate as a SCP between the client node and one or more server nodes operating service instances of a first service. The method comprises sending a first service request to the first SCP node, requesting the first service; and receive service information from the first SCP node, the service information comprising an indication of the service instances of the first service that are operating on the one or more server nodes.

According to a seventh aspect there is a computer program comprising instructions which, when executed on at least one processor, cause the at least one processor to carry out a method according to the third or sixth aspects.

According to an eighth aspect there is a carrier containing a computer program according to the seventh aspect, wherein the carrier comprises one of an electronic signal, optical signal, radio signal or computer readable storage medium.

According to a ninth aspect there is a computer program product comprising non transitory computer readable media having stored thereon a computer program according to the seventh aspect.

According to a tenth aspect there is a system in a communications network, the system comprising a client node, and a first service communication proxy SCP node. The client node is configured to send a first service request to the first SCP node, requesting the first service; the SCP node is configured to receive a first service request from the client node, requesting the first service; the SCP node is configured to send service information to the client node, the service information comprising an indication of the service instances of the first service that are operating on the one or more server nodes; and the client node is configured to receive the service information from the first SCP node.

Thus, in this way, the client node may be provided with information that can be used by the client node to recognize that the error scenario outlined above has occurred (e.g. because the list of service instances specified as forbidden by the client node in the service request included all available service instances running instances of the service). As a result, it provides the client node the opportunity to throttle traffic (with application knowledge) with indirect communication with model D. Thus, random/arbitrary throttling by the SCP can be avoided. Furthermore, the scenario whereby the client receives a non-dedicated, or non-specific error without any useful explanatory information is also avoided. The disclosure herein also avoids scenarios whereby the random throttling and errors occur in a looped manner. Thus, in summary, the disclosure herein provides methods, nodes and systems for throttling by the Client where service request handling is performed using indirect communication model D.

### Brief Description of the Drawings

For a better understanding and to show more clearly how embodiments herein may be carried into effect, reference will now be made, by way of example only, to the accompanying drawings, in which:
Fig. 1 shows a prior art model D service request handling mechanism;
Fig. 2 shows a prior art signal diagram showing various model D service request scenarios;
Fig. 3 shows a client node according to some embodiments herein;
Fig. 4 shows a method performed by client node according to some embodiments herein;
Fig. 5 shows a SCP node according to some embodiments herein;
Fig. 6 shows a method performed by a SCP node according to some embodiments herein;
Fig. 7 shows a signal diagram according to some embodiments herein;
Fig. 8 shows a signal diagram according to some embodiments herein;
Fig. 9 shows a signal diagram according to some embodiments herein; and
Fig. 10 shows a signal diagram according to some embodiments herein.

### Detailed Description

As described above, current model D service request handling may result in a looped error scenario that is unable to mitigate overload, and eventually, if the overload situation is not mitigated by other means, all the service instances will get congested. In model D, discovery and selection is performed by the SCP node 104, in collaboration with the NRF 106, and as such, the client node 102 making the service request is unaware of which service instances on server nodes 108a-d are available to service the request. The client may specify in a service request for a first service, one or more service instances that should not be selected by the SCP node, if the client node has information from previous requests that the particular service instances are overloaded. However, the client node may, without realising, specify that none of the service instances should be selected, leading to an error situation.

As will be described in more detail below, in embodiments herein, the SCP provides Service Information to the client node, which may comprise an indication of all NF(service)instances and/or NF(service)Sets for the requested NF service. In summary:
- The SCP can include the Service Information in a response to the client node when it identifies the need, or alternately in all cases (e.g. in response to all service requests).
- The SCP may include the service information in an error response, with a new identification of an error, when the SCP is unable to select any destination.
- The client node can then make use of the service information, in addition to any overload information, to perform throttling.

In more detail, the disclosure herein relates to a communications network (or telecommunications network). A communications network may comprise any one, or any combination of: a wired link (e.g. ASDL) or a wireless link such as Global System for Mobile Communications (GSM), Wideband Code Division Multiple Access (WCDMA), Long Term Evolution (LTE), New Radio (NR), WiFi, Bluetooth or future wireless technologies. The skilled person will appreciate that these are merely examples and that the communications network may comprise other types of links. A wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

The embodiments herein relate to a client node, a server node and a first service communication proxy, SCP node that acts as a SCP between the client node and the server node.

A client node may be a NF node. For example, for most request types, the client node is a NF node of a consumer, NFc. For notifications requests which are sent from one node a producer NFp1 to another node of a producer NFp2, then the client node may be the first node of the producer NFp1.

A NF is a third generation partnership project (3GPP) adopted, or 3GPP defined, processing function in a network, which has defined functional behaviour and 3GPP defined interfaces. An NF can be implemented either as a network element on a dedicated hardware, as a software instance running on a dedicated hardware, or as a virtualised function instantiated on an appropriate platform, e.g. on a cloud infrastructure. Herein, the term "node" in relation to an "NF node" will be understood to cover each of these scenarios. A NF may comprise a core network function such as, for example, a core network functions in a Fifth Generation Core network (5GC). As an example, the client node may be the AMF node (in 5G). The AMF node receives traffic from a User Equipment (UE), via the so-called NAS interface.

The client node requests access to a first service. Generally, a service is software intended to be managed for a user. Herein, the first service can be any type of service, such as a communication service (e.g. a notification service or a callback service), a context management (e.g. user equipment context management (UECM)) service, a data management (DM) service, or any other type of service. The first service can be provided in the Communications network by one or more service instances of the service. A service instance runs or operates on a server node. Examples of services include, but are not limited to: the Access and Mobility Policy Control Service which runs in a PCF node; the Subscriber Data Management (SDM) service and the and UE Context Management (UECM_Mng) services that run in a UDM node.

A server node may also be a NF node. For example, a NF node of a producer. Examples of server nodes include, but are not limited to: UDM NF. The UDM network function may have service instances of services running thereon such as, the aforementioned SDM service or UECM_Mng service.

The skilled person will appreciate that different deployment configurations are possible for the client, server and SCP nodes. For example, the first SCP node and the client node may be deployed in independent deployment units; and/or the Client node and one or more of the server nodes may be deployed in independent deployment units.

The first SCP node may be deployed as a distributed network element. Part of the first SCP node may be deployed in the same deployment unit as the client node; and/or part of the first SCP node may be deployed in the same deployment unit as one or more of the server nodes. In some embodiments, at least one second SCP node may be configured to operate as an SCP between the client node and the first SCP node; and/or at least one third SCP node may be configured to operate as an SCP between the first SCP node and one or more of the server nodes.

In some embodiments, the first SCP node, and one or more of the at least one second SCP node and the at least one third SCP node may be deployed in independent deployment units. The at least one second SCP node and/or the at least one third SCP node may be deployed as distributed network elements. In some embodiments, an entity comprises the first SCP node and a network repository function, NRF, node.

The skilled person will appreciate that these are merely example configurations and that the SCP node(s), client node and server nodes may be arranged in any configuration in the communications network.

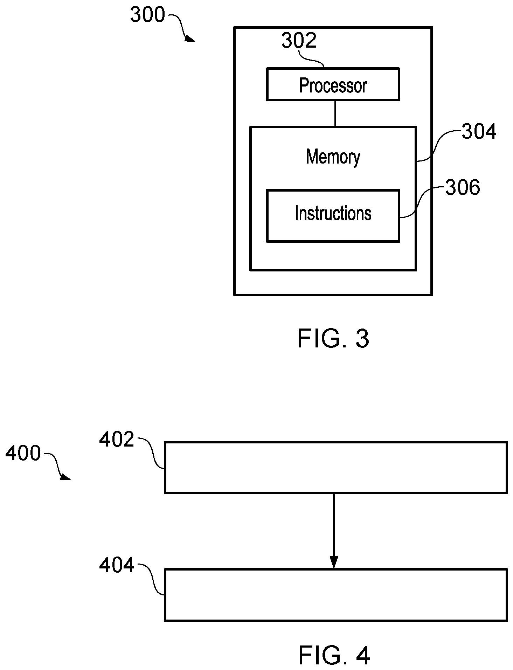

Turning now to Fig. 3, which illustrates a client node 300 in a communications network according to some embodiments herein. Generally, the client node 300 may comprise any component or network function (e.g. any hardware or software module) in the communications network suitable for performing the functions described herein. For example, a client node may comprise equipment capable, configured, arranged and/or operable to communicate directly or indirectly with a UE (such as a wireless device) and/or with other network nodes or equipment in the communications network to enable and/or provide wireless or wired access to the UE and/or to perform other functions (e.g., administration) in the communications network.

Examples of client nodes were given above and the detail therein will be understood to apply to the client node 300.

The client node 300 is configured (e.g. adapted, operative, or programmed) to perform any of the embodiments of the method 400 as described below. It will be appreciated that the client node 300 may comprise one or more virtual machines running different software and/or processes. The client node 300 may therefore comprise one or more servers, switches and/or storage devices and/or may comprise cloud computing infrastructure or infrastructure configured to perform in a distributed manner, that runs the software and/or processes.

The client node 300 may comprise a processor (e.g. processing circuitry or logic) 302. The processor 302 may control the operation of the client node 300 in the manner described herein. The processor 302 can comprise one or more processors, processing units, multi-core processors or modules that are configured or programmed to control the client node 300 in the manner described herein. In particular implementations, the processor 302 can comprise a plurality of software and/or hardware modules that are each configured to perform, or are for performing, individual or multiple steps of the functionality of the client node 300 as described herein.

The client node 300 may comprise a memory 304. In some embodiments, the memory 304 of the client node 300 can be configured to store program code or instructions 306 that can be executed by the processor 302 of the client node 300 to perform the functionality described herein. Alternatively or in addition, the memory 304 of the client node 300, can be configured to store any requests, resources, information, data, signals, or similar that are described herein. The processor 302 of the client node 300 may be configured to control the memory 304 of the client node 300 to store any requests, resources, information, data, signals, or similar that are described herein.

It will be appreciated that the client node 300 may comprise other components in addition or alternatively to those indicated in Fig. 3. For example, in some embodiments, the client node 300 may comprise a communications interface. The communications interface may be for use in communicating with other nodes in the communications network, (e.g. such as other physical or virtual nodes). For example, the communications interface may be configured to transmit to and/or receive from other nodes or network functions requests, resources, information, data, signals, or similar. The processor 302 of client node 300 may be configured to control such a communications interface to transmit to and/or receive from other nodes or network functions requests, resources, information, data, signals, or similar.

Briefly, in one embodiment, the client node 300 may be configured to send a first service request to the first SCP node, requesting the first service; and receive service information from the first SCP node, the service information comprising an indication of the service instances of the first service that are operating on the one or more server nodes.

This is illustrated in Fig. 4 which shows a method 400 performed by a client node in a communications network, the communications network comprising a first service communication proxy, SCP, node configured to operate as a SCP between the client node and one or more server nodes operating service instances of a first service. The method 400 comprises: sending 402 a first service request to the first SCP node, requesting the first service; and receiving 404 service information from the first SCP node, the service information comprising an indication of the service instances of the first service that are operating on the one or more server nodes.

The method 400 may be performed as part of an overload mitigation procedure with indirect communication, that utilises the model D, 3GPP architecture, described above. As noted above, in model D the SCP is the responsible for initial selection and reselection of service instances.

In step 402, the client sends a first service request to the SCP, requesting the first service. A service request can also be referred to as a request for a service.

If the client node has previously requested the first service, then the client node may have received overload information on some available service instances (e.g. from OCI header(s)). If such information is available, then the client node may provide an indication of one or more service instances that should not be selected by the first SCP node to provide the first service to the client node (e.g. due to overload).

As used herein, an "indication" may be any information that can be used to identify the one or more service instances. For example, the indication may be one or more numbers corresponding to respective service instances (e.g. an enumeration). As another example, the identification may be one or more identifiers associated with the one or more service instances. The skilled person will appreciate that these are merely examples and that any other type of indication or manner of identifying the one or more service instances may equally be used.

As used herein, a server node, or Network Function Instance ("NF instance") may hold, or run one or multiple service instances of services of same "type" or different types. E.g. UDM Id1 is an instance of the UDM NF, that may include/run the UE Context Management service (one or multiple instances thereof), and/or other services, such as the Subscriber Data Management service (one or multiple instances thereof).

Thus, a server node may also be referred to as a NF node and the server node may have service instances of the first service running thereon.

There may be many service instances of a service running/operating on different server nodes. The list of service instances of a service may be referred to herein as the NF(Service)lnstances.

The NF(service) instances may be deployed individually or as part of a Set (e.g. group). The list of sets of service instances may be referred to herein as NF(service)Sets.

In step 404, the indication of the service instances of the first service may thus comprise: an indication of all service instances of the first service and/or an indication of all sets of service instances of the first service. E.g. all NF(service)instances and/or NF(service)Sets for the requested NF service.

The list of service instances may comprise instances that are active or "healthy", e.g. and that may be used to provide the first service to the client node. It is noted that there may be other service instances, but these may not be in a valid state. E.g. the NRF may set an state, SUSPENDED, or UNDISCOVERABLE to some instances, and those may be excluded from this list of instances. As used herein, the "valid" state by this NRF supervision is "REGISTERED".

In some embodiments, alternatively or additionally, the service information may comprise an indication of an estimated throttling and/or an estimated percentage of traffic abatement to apply to traffic sent to a first service instance of the first service on a first server node. In other words, estimated throttling and/or estimated percentages of traffic abatement may be sent for one or more of the service instances.

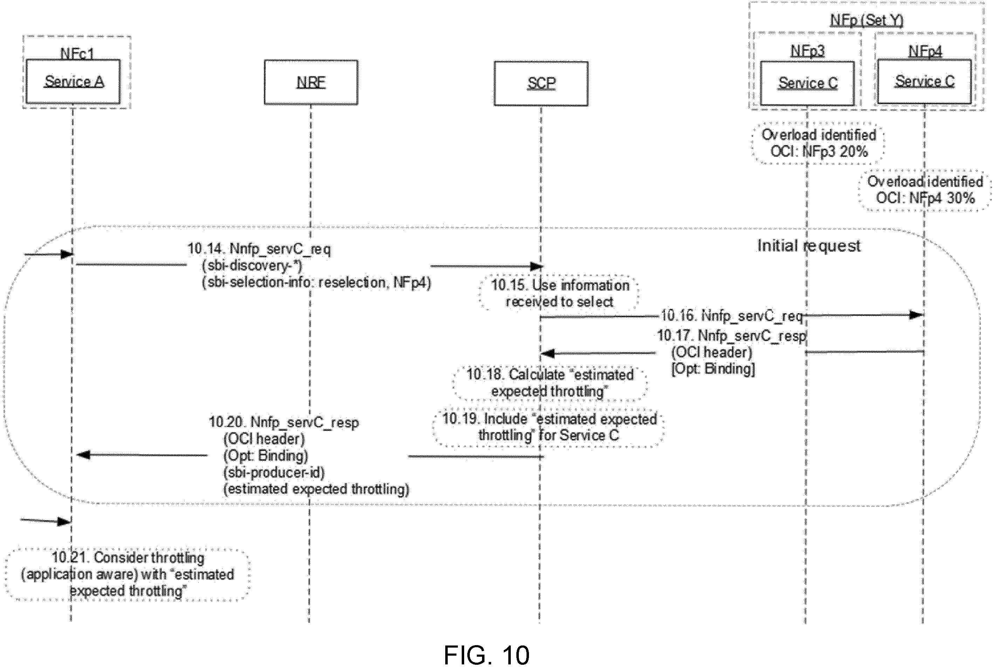

In some embodiments, the service information may comprise an indication of throttling and/or an estimated percentage of traffic abatement to apply to (e.g. to be applied by the client node) for a first service instance selected by the SCP to provide the first service to the client node. This is described in more detail below with respect to Fig. 10.

In some embodiments, in step 404, the service information may be received in a service response message. In other embodiments, the service information is received in an error message. It will be appreciated however that the service information may equally be received in any other type of message from the SCP.

The method 400 may further comprise determining, from the service information and overload information obtained in response to previous service requests, that all the service instances of the first service are overloaded. In response to a determination that all the service instances are overloaded, the client node may performing overload abatement based on request throttling; and/or otherwise block traffic from a User Equipment, UE. For example, in embodiments where the client node is the 5G NF node AMF, the AMF may be able to provide a so called "cause" to the UE, and in some cases, the traffic could be stopped at terminal/UE directly in response to a determination that all service instances of the first service are overloaded.

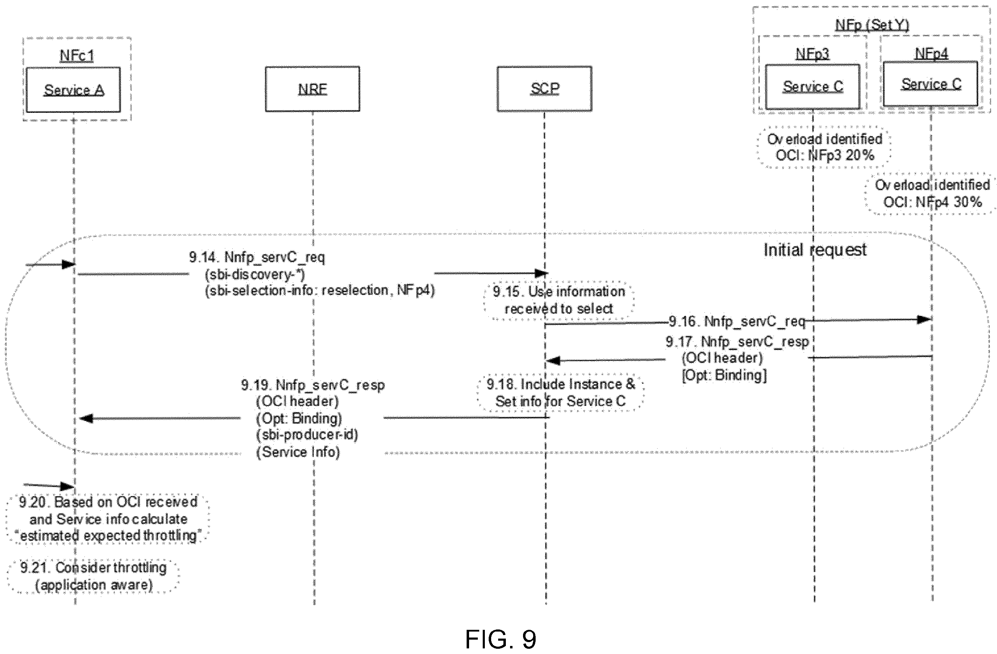

In some embodiments, throttling may be based on an estimation of the expected throttling that should be performed towards NF(service) instances and/or NF(service)Sets for which no OCI header information is available. The estimation for these NF service instances/service sets may be based on OCI header information that is available and that has been provided by other NF(service) instances and/or NF(service)Sets. This is described in detail below with respect to Figs. 9 and 10.

In this way, the throttling may be optimised and directly controlled by the client node, e.g throttling may be performed in an application aware manner (as opposed to the arbitrary throttling/error loops as described in the Background section).

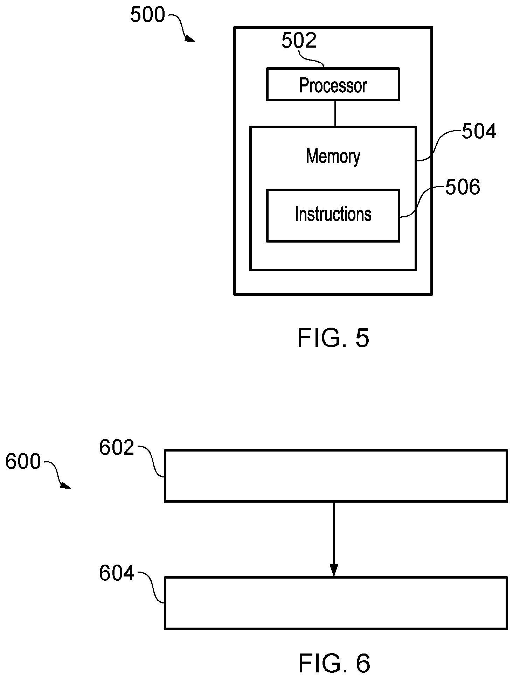

Turning now to Fig. 5, there is a SCP node 500 in a communications network according to some embodiments herein. Generally, the SCP node 500 may comprise any component or network function (e.g. any hardware or software module) in the communications network suitable for performing the functions described herein. For example, a SCP node may comprise equipment capable, configured, arranged and/or operable to operate as an SCP between a client node and a server node. As noted above, the client node and the server node may be two NF nodes, such as a NF of a consumer and a NF of a producer.

The SCP node 500 is configured (e.g. adapted, operative, or programmed) to perform any of the embodiments of the method 600 as described below. It will be appreciated that the SCP node 500 may comprise one or more virtual machines running different software and/or processes. The SCP node 500 may therefore comprise one or more servers, switches and/or storage devices and/or may comprise cloud computing infrastructure or infrastructure configured to perform in a distributed manner, that runs the software and/or processes.

The SCP node 500 may comprise a processor (e.g. processing circuitry or logic) 502. The processor 502 may control the operation of the SCP node 500 in the manner described herein. The processor 502 can comprise one or more processors, processing units, multi-core processors or modules that are configured or programmed to control the SCP node 500 in the manner described herein. In particular implementations, the processor 502 can comprise a plurality of software and/or hardware modules that are each configured to perform, or are for performing, individual or multiple steps of the functionality of the SCP node 500 as described herein.

The SCP node 500 may comprise a memory 504. In some embodiments, the memory 504 of the SCP node 500 can be configured to store program code or instructions 506 that can be executed by the processor 502 of the SCP node 500 to perform the functionality described herein. Alternatively or in addition, the memory 504 of the SCP node 500, can be configured to store any requests, resources, information, data, signals, or similar that are described herein. The processor 502 of the SCP node 500 may be configured to control the memory 504 of the SCP node 500 to store any requests, resources, information, data, signals, or similar that are described herein.

It will be appreciated that the SCP node 500 may comprise other components in addition or alternatively to those indicated in Fig. 5. For example, in some embodiments, the SCP node 500 may comprise a communications interface. The communications interface may be for use in communicating with other nodes in the communications network, (e.g. such as the client node and the server node, or the NRF). For example, the communications interface may be configured to transmit to and/or receive from other nodes or network functions requests, resources, information, data, signals, or similar. The processor 502 of SCP node 500 may be configured to control such a communications interface to transmit to and/or receive from other nodes or network functions requests, resources, information, data, signals, or similar.

Briefly, in one embodiment, the SCP node 500 is configured to receive a first service request from the client node, requesting the first service and send service information to the client node, the service information comprising an indication of the service instances of the first service that are operating on the one or more server nodes.

This is illustrated in Fig. 6 which shows a method performed by a first service communication proxy, SCP node in a communications network, wherein the first SCP node is configured to operate as a SCP between a client node and one or more server nodes operating service instances of a first service. Briefly, the method comprises receiving 602 a first service request from the client node, requesting the first service; and sending 604 service information to the client node, the service information comprising an indication of the service instances of the first service that are operating on the one or more server nodes.

The method 600 is complementary to the method 400. For example, a system comprising a client node and a SCP node may perform the methods 400 and 600 between each other, in a complementary manner.

In step 602, in some embodiments, the first service request from the client node comprises an indication of a subset of the service instances that should not be selected by the first SCP node to provide the first service to the client node. In this sense the subset may be one or more of the service instances, e.g. that are specified in a list.

Turning to step 604, in some embodiments, the step of sending service information to the client node is performed responsive to the step of receiving a first service request from the client node. In other words, the service information may be sent in response to any service request received from a client node.

In other embodiments, the step of sending service information to the client node is performed responsive to the first SCP node being unable to select a service instance from the service instances to provide the first service to the client.

For example, in embodiments where the first service request from the client node indicates a subset of the service instances (e.g. indicates one or more of the service instances in a list) that should not be selected by the first SCP node to provide the service to the client node, then the step of sending service information to the client node may be performed in response to the first SCP node being unable to select a service instance to provide the first service to the client node because all of the service instances of the first service are indicted in the subset of the service instances as being service instances that should not be selected by the first SCP node to provide the service to the client node. In other words, if the client indicates that all service instances are forbidden or should not be used, then the SCP node may perform step 604.

Put another way, the service information may be added to the service response message if there is no Location identifying a resource created by a service instance of the first service for the service response message, or that sbi-target-apiroot has not been received in the request. Both of these conditions identify the request as being an initial request. In some embodiments, the service information is sent if there is no Location identifying a resource created by a service instance of the first service for the service response message, and if that sbi-target-apiroot has not been received in the request. This provides a solution for NFps (that do not create a resource, it is provisioned, e.g. UDM).

It is noted that for NFps (that do create a resource, e.g. PCF), the Service Information may be sent, even if a Location is received. This would allow the methods illustrated in Figs 9 and 10, whereby throttling is applied based on an estimation of the required percentage traffic abatement, to be applied to NFps (that do create a resource).

As noted above, the indication of the service instances of the first service may comprise: an indication of all service instances of the first service and/or an indication of all sets of service instances of the first service. For example, the service information may comprise NF(service) instance and/or NF(service)Set.

OCI header may include information of overload at instance level or at Set level. If the service is provided OCI info at Set level, the NFc can understand how many Sets are deployed to for that service. It can be more efficient if the NFp provides OCI at Set level, moreover when if LB works fine, the whole Set may get overloaded at once, i.e. members of the set will get in overloaded close in time. Thus, the service information may advantageously indicate the service instances individually or as sets.

In any of the embodiments above, the step of sending service information to the client node may comprise sending an error message to the client node, the service information being comprised in the error message.

Alternatively, or additionally, the step of sending service information to the client node may comprise sending the service information in a service response message.

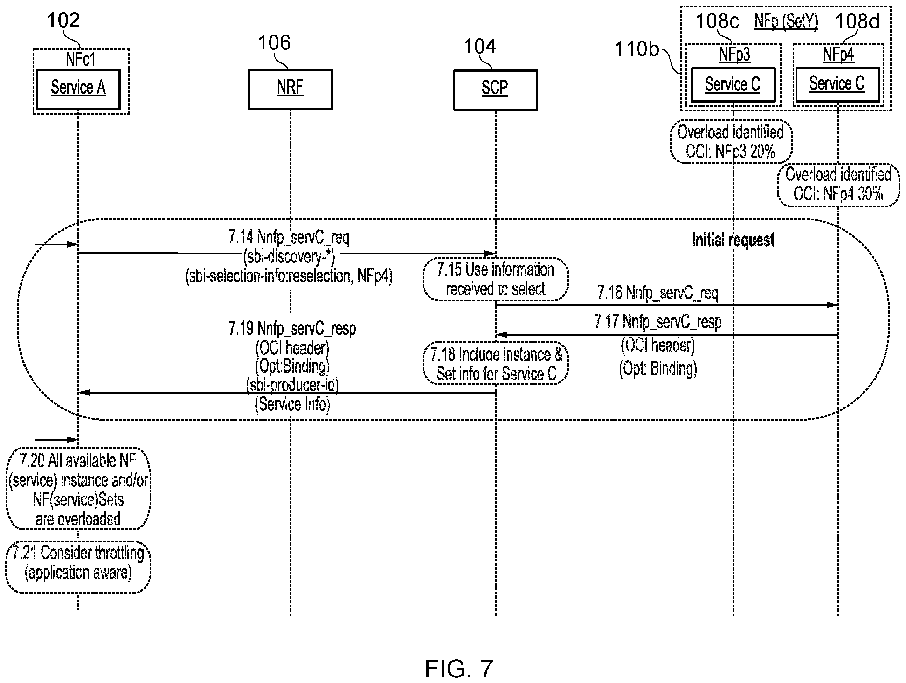

Turning now to Fig. 7, which illustrates an example signal diagram according to some embodiments herein.

In this example, there are the following steps:
Steps 7.14 to 7.17: These steps are the same as steps 2.14-2.17 in Fig. 2.
Step 7.18: SCP identifies the request received in 14 is an initial request (based on the lack of the sbi-target-apiroot) and it identifies the response does not include a Location, then the SCP identifies the target NFp has not created a resource. In this case, the SCP includes in the response the information about the NF(service)instances and NF(service)Set of this NF(service)type. E.g. in this example, this information is NF service C has two instances in NFp3 and NFp4, that below to NFp Set Y.
   Note: the SCP knows which NF(service)instance and NF(service)Sets provide Service C based on cached discovery results, or if not cached, the SCP can send a new NRF discovery to obtain these profiles.
Step 7.19: in the response the Service Info is included. (e.g. it performs step 604 of the method above and sends the service information the NF(service)instances and NF(service)Set to the client node NFc1).
Step 7.20: based on "Service Info" received in step 19, and the overloaded information, the NFc identifies that all potential targets for this request are overloaded.
Step 7.21: based on the knowledge that all potential targets are overloaded, then the NFc is able to perform overload abatement based on throttling. Then, the NFc is able to apply application logic to perform the most efficient mitigation.

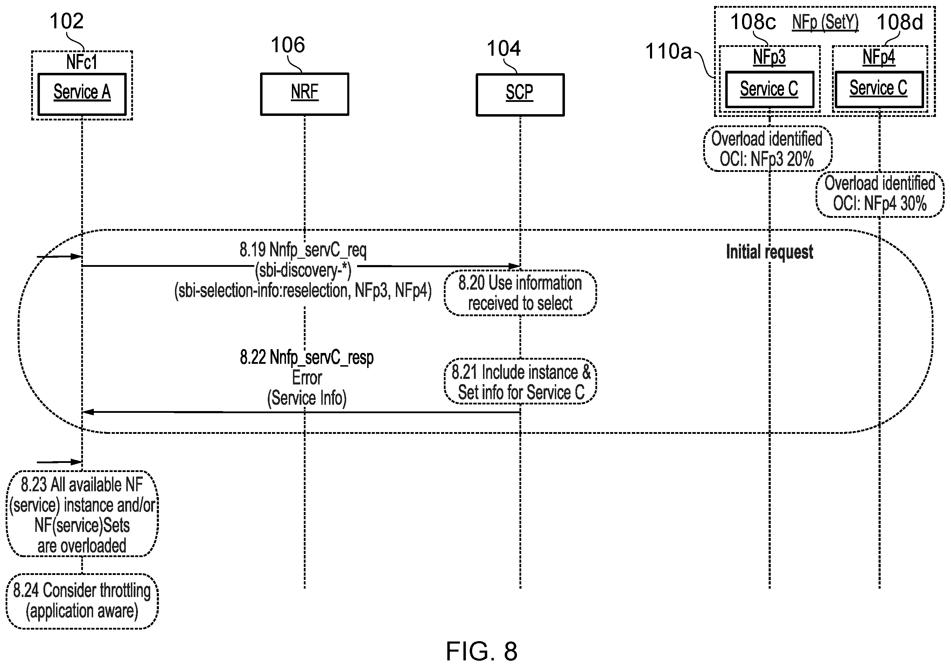

Turning now to Fig 8, which illustrates another example according to another embodiment, As an alternative to the proposal in figure 2 or as an addition, the solution in following diagram may apply.
Steps 8.19 and 8.20: same as steps 2.19 and 2.20 in Fig. 2.
Step 8.21: If the SCP identifies it is unable to reselect since the available targets are all in the list of forbidden destinations (included in sbi-selection-info in Step 19), then it includes the Service info (NF(service) instances and NF(service) Sets) for that NF type in the response. Step 8.22: Service info is included in the response. A new error is required to identify this situation.
Step 8.23 and 8.24: same as steps 7.20 and 7.21 in Fig. 7.

There is thus provided various methods for handling a service request using model D indirect communication whereby service requests are sent through a SCP. As noted above, the service information provided herein allows the client node to perform throttling in an overload situation, thus preventing error loops and/or arbitrary throttling that is not controlled at the application level.

Turning to other embodiments, there is also provided a system in a communications network, the system comprising a client node, and a first service communication proxy SCP node. The client node is configured to perform the method 400 and the SCP node is configured to perform the method 600. In other words, the client node is configured to send a first service request to the first SCP node, requesting the first service; the SCP node is configured to receive a first service request from the client node, requesting the first service; the SCP node is configured to send service information to the client node, the service information comprising an indication of the service instances of the first service that are operating on the one or more server nodes; and the client node is configured to receive the service information from the first SCP node.

Turning to other embodiments illustrated with respect to Figs. 9 and 10. In brief, these Figures illustrate embodiments for overload mitigation through the use of estimated throttling requirement values. In these embodiments, either the SCP or the client node (NFc) may calculate an "estimated expected throttling" based on OCI headers received for the corresponding target service instances or service instance sets (e.g. NF(service) instances and/or NF(service)Sets). Additionally, Capacity can be used to calculate the "estimated expected throttling", The SCP may obtain this from the service instance profiles (NFp profiles). The service instance profiles may be cached or obtained by sending a request to the NRF to obtain the service instance profiles. The Capacity may also be provided to the client node (NFc) for this calculation.

Fig. 9 shows a method of throttling according to some embodiments herein. In this method throttling required for services to which a service request has not previously been made (e.g. for which the client node does not have OCI header information for) is estimated by the client node. Fig. 9 illustrates the following steps:
Steps 9.14 to 9.19, and 9.21 same as steps 7.14 to 7.19, and 7.21 in Fig. 7, and the detail described above will be understood to apply equally to these steps in Fig. 9.
Step 9.20: Based on OCI information received, and Service Info, the NFc knows that some of the potential target service instances for the next request to be sent are overloaded. Instead of waiting, as in Figs 7 and 8, until all available service instances are overloaded, the NFc may start throttling traffic straight away. The client node estimates a new expected throttling percentage of traffic abatement towards each NF(service)instances and/or NF(service)Sets, that is appropriate given the number of service instances that the NFc has not received any OCI header information from (e.g. because it may not have interacted yet with them), and/or given that they may not be overloaded.

In the example in Fig 9, the NFc will be informed in Service info that there is a Set Y, with two NFp instances #3 and #4, where the Service C is deployed and available. As well, NFc may have received (as in the example), information from both NFp3 and NFp4, i.e. 20% traffic reduction is expected to NFp3, and 30% to NFp4. Then, since NFc knows these are all the available NFps, then it can calculate an "estimated expected throttling", e.g. 25% and start applying this to all the request to the corresponding Service C.
If the NFc has not received e.g. OCI info from NFp3, only from NFp4 (30%), then NFc "estimated expected throttling" could be 15%.

Thus, in some embodiments of the method 600 described above, the client may further perform steps of: using the received service information and overload information obtained in response to previous service requests to estimate a throttling or a percentage of traffic abatement appropriate for one or more service instances for which the client does not have overload information from previous service requests. The overload information may be, for example, information from an OCI header.

For example, an average of the known traffic abatement percentages may be applied to the service instances for which a percentage of expected traffic abatement is not available/known to the client node.

In another example, the client node may apply a predefined proportion of the average known traffic abatement percentages. The predefined proportion may be configurable so that it can be fine-tuned for each network. For example, since NFc has not received info from all the services, it may assume the rest of the instances are not overloaded at all, and then consider a minor percentage of the average of received values.

In another example, a look up table may be used to obtain an appropriate percentage of traffic abatement, in view of the known percentage traffic abatement values.

The client node may repeat the step of estimating a throttling or a percentage of traffic abatement, e.g. in response to receiving (overload) information from any server node (NFp) that receives a request.

### NFc recalculate "estimated expected throttling" based on OCI header received.

| | | | | |
|---|---|---|---|---|
| Capacity | Integer | O | 0..1 | Static capacity information within the range 0 to 65535, expressed as a weight relative to other NF instances of the same type; if capacity is also present in the nfServiceList parameters, those will have precedence over this value. (NOTE 4). |

In some embodiments, the service information comprises (alternatively or additionally to the (NF(service) instance and/or NF(service)Set) information), capacity information of each of the service instances of the first service.

The capacity may further be used to determine (e.g. calculate or estimate) a percentage of traffic abatement to be applied to a service instance (where OCI-header information is not available for said instance).

Thus, the Service info may be extended including the Capacity for each of the NF(service)instances provided. This could be used as input information for the calculation of the "estimated expected throttling". Note Capacity is included in the NFp profile, then it can be obtained by the SCP from the NRF. This requires following updates in figure 4. Step 9.18. SCP adds the Capacity in the Service Information, obtained from cached discovery results, or if NFp profiles are not cached, then SCP performs a new NRF discovery to get all the NFps that provide Service C. For example, the method 600 may further comprise the SCP sending a message to the NRF to request capacity information for each service instance of the first service. This may then be added to the service information that is sent to the client node in step 604 of the method 600.

Extracted from 29.510:

| | | | | |
|---|---|---|---|---|
| capacity | Integer | O | 0..1 | Static capacity information within the range 0 to 65535, expressed as a weight relative to other NF instances of the same type; if capacity is also present in the nfServiceList parameters, those will have precedence over this value. (NOTE 4). |

Step 9.20: calculation of estimated expected throttling takes Capacity into account.

The Capacity is used, according to 3GPP, for load control, in a way that load should be calculated taking into account the Capacity. E.g. for an NFc, a relative value of load shall be provided, considering the static capacity of each NFp (that provide the load info).

Similarly, the Capacity can be used in this case by the NFc, in order to identify the relative expected throttling, the Capacity of the NFps that provided could be taking into account. An NFp with a higher capacity, it able to process more requests, then a reduction of a 30% of traffic will require to throttle more requests than for another NFp with smaller Capacity, but the same request to reduce a 30%.

E.g. NFp3 may indicate 20% with Capacity=10000, while NFp4 indicates 30% with Capacity=50000. That is, a 30% reduction towards NFp4 will require to reduce 5 times more requests that the same 30% towards NFp3.

In some embodiments, the SCP may instruct the client node of the manner in which the estimation is to be performed. For example, the method 600 may further comprise a step of: sending an indication to the client node of the manner in which to estimate traffic throttling or a percentage of traffic abatement that should be applied when obtaining a service from a service instance for which there is no OCI-header information.

In some embodiments, the indication of the manner in which to estimate traffic throttling or a percentage of traffic abatement that should be applied, may be added to the service information and sent to the client in step 604 of the method 600. Alternatively, it may be sent in a different message.

In other words, the algorithms or policies required for the calculation of the "estimated expected throttling", e.g. how to consider Capacity for the calculation, how to consider different percentages for the calculation... can be centrally configured in the SCP, and may be included in the response 9.19, included into Service Info, or as an extra information. That is, an "estimated expected throttling" calculation method may be configured in the SCP, and provided to the NFc. In such embodiments, in step 9.20, the client node NFc would take this "estimated expected throttling" calculation method into account for the calculation.

In some embodiments, overload mitigation based on the calculation of an "estimated expected throttling" could be applicable as well for model C, overwriting or complementing the information provided by individual OCI-headers.

Turning now to Fig. 10 which shows a signal diagram for Overload mitigation with model D - "estimated expected throttling" whereby the calculation of the estimated throttling is performed by the SCP. This signal diagram illustrates the following steps:
Steps 10.14 to 10.17 same as steps 7.14 to 7.17 of Fig. 7 and the detail therein will be understood to apply equally to these steps in Fig. 10.
Step 10.18: In this variant, it is the SCP that calculates the "estimated expected throttling". The estimation may be performed using any of the methods described above with respect to Fig. 9 (e.g. based on previous OCI-header information and/or capacity values obtained from the NRF) and the detail above will be understood to apply equally to step 10.18 of Fig. 10.
   For this, the SCP shall have access to the Service Info, (which as noted above, may, in some embodiments comprise the Capacity), this information is obtained from the NRF or cached. The SCP may further keep the OCI headers that receives, e.g. it may store OCI header towards Service C.
Step 10.19: the SCP may only provide the "estimated expected throttling" without any other information, since the client node (NFc) will not need in this case the Service info, as long as with the "estimated expected throttling" is enough to proceed to throttling.
   Note SCP may update the calculation every time it receives new OCI headers, and provide the updates to the client node.
Step 10.20: only "estimated expected throttling" is provided. Note: OCI header may not be used by NFc, but as per today's 3GPP TS, the SCP shall always forward this to the NFc. Step 10.21:the NFc will consider throttling using received "estimated expected throttling", using the same reduction of traffic for all the requests to the Service C.

As noted above, an "estimated expected throttling" calculation method may be configured in the SCP, and in this case, this could be taken into account by the SCP for the calculation.

Thus, in the embodiment of Fig. 10, there is illustrated a second method performed by a first service communication proxy, SCP node in a communications network, wherein the first SCP node is configured to operate as a SCP between a client node and one or more server nodes operating service instances of a first service. The second method comprises: receiving a first service request from the client node, requesting the first service. The method further comprises sending service information to the client node, the service information comprising an indication of an estimated throttling or an estimated percentage of traffic abatement that is to be applied (e.g. should be applied) to traffic sent to a service instance of the first service selected by the SCP to provide the first service to the client node.

The second method may comprise the SCP sending a request to a NRF to obtain capacity information for each service instance of the first service.

The second method may comprise the SCP caching overload information (e.g. obtained from OCI-headers obtained in response to previous requests for the first service), for one or more of the service instances of the first service. The overload information may be used to estimate a throttling or an estimated percentage of traffic abatement that is to be applied to traffic sent to a service instance of the first service for which overload information is not otherwise available.

In the second method, the service information may additionally comprise an indication of the service instances of the first service that are operating on the one or more server nodes (as described above with respect to the methods 400 and 600).

On the client side, the client node may be configured to perform complementary operations to those described above for the SCP. For example, the client may send a first service request to the first SCP node, requesting the first service; and receive service information from the first SCP node, the service information comprising an indication of an estimated throttling or an estimated percentage of traffic abatement that is to be applied (e.g. should be applied) to traffic sent to a service instance of the first service selected by the SCP to provide the first service to the client node. As noted above, this may be received alternatively, or additionally to an indication of the service instances of the first service that are operating on the one or more server nodes.

The overload mitigation based on the calculation of an "estimated expected throttling" when executed in the SCP has the advantage that allows the algorithm for this calculation is centralized in the SCP, that may even be by the same vendor in the whole network. This could allow the operator to increase the control on how overload control is performed in the network, and the definition of certain preferences or policies for this calculation.

Turning to other embodiments, there is also provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

A carrier may be an electronic signal, optical signal, radio signal or computer readable storage medium. The carrier of a computer program may be any entity or device capable of carrying the program. For example, the carrier may be or include a computer readable storage medium, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method performed by a first service communication proxy, SCP node in a communications network, wherein the first SCP node is configured to operate as a SCP between a client node and one or more server nodes operating service instances of a first service, the method comprising:
receiving a first service request from the client node, requesting the first service; and **characterized in that** the method further comprises the step of:
sending service information to the client node, the service information comprising an indication of the service instances of the first service that are operating on the one or more server nodes.

2. A method as in claim 1 wherein the indication of the service instances of the first service comprises:
an indication of all service instances of the first service; and/or
an indication of all sets of service instances of the first service.

3. A method as in claim 1 or 2 wherein the step of sending service information to the client node is performed responsive to the step of receiving a first service request from the client node.

4. A method as in any one of claims 1 to 3 wherein the step of sending service information to the client node is performed responsive to the first SCP node being unable to select a service instance from the service instances to provide the first service to the client node.

5. A method as in any one of the preceding claims wherein:
the step of sending service information to the client node comprises sending the service information in a service response message; and
the service information is added to the service response message if there is no Location identifying a resource created by a service instance of the first service for the service response message and the request received did not include sbi-target-apiroot.

6. A method as in any one of claims 1 to 3 wherein the first service request from the client node comprises an indication of a subset of the service instances that should not be selected by the first SCP node to provide the first service to the client node; and
wherein the step of sending service information to the client node is performed in response to the first SCP node being unable to select a service instance to provide the first service to the client node because all of the service instances of the first service are indicted in the subset of the service instances as being service instances that should not be selected by the first SCP node to provide the service to the client node.

7. A method as in claim 6 wherein the step of sending service information to the client node comprises sending an error message to the client node, the service information being comprised in the error message.

8. A method performed by a client node in a communications network, the communications network comprising a first service communication proxy, SCP, node configured to operate as a SCP between the client node and one or more server nodes operating service instances of a first service, the method comprising:
sending a first service request to the first SCP node, requesting the first service; and **characterized in that** the method further comprises the step of:
receiving service information from the first SCP node, the service information comprising an indication of the service instances of the first service that are operating on the one or more server nodes.

9. A method as in claim 8 wherein the indication of the service instances of the first service comprises:
an indication of all service instances of the first service and/or
an indication of all sets of service instances of the first service.

10. A method as in claim 8 or 9 wherein the service information is received in a service response message or an error message.

11. A method as in any one of claims 8 to 10 further comprising:
determining, from the service information and overload information obtained in response to previous service requests, that all the service instances of the first service are overloaded.

12. A method as in claim 11 further comprising:
in response to the determination that all the service instances are overloaded:
performing overload abatement based on request throttling; and/or
blocking traffic from a User Equipment, UE.

13. A computer program comprising instructions which, when executed on at least one processor, cause the at least one processor to carry out a method according to any one of the preceding claims.

14. A first service communication proxy, SCP node in a communications network, wherein the first SCP node is configured to operate as a SCP between a client node and one or more server nodes operating service instances of a first service, wherein the SCP is operative to perform the method of any one of claims 1 to 7.

15. A client node in a communications network, the communications network comprising a first service communication proxy, SCP, node configured to operate as a SCP between the client node and one or more server nodes operating service instances of a first service, the client node being operative to perform the method of any one of claims 8 to 12.

## Patentansprüche

1. Verfahren, das von einem ersten Dienstkommunikationsproxy-Knoten, SCP-Knoten, in einem Kommunikationsnetzwerk durchgeführt wird, wobei der erste SCP-Knoten dazu konfiguriert ist, als SCP zwischen einem Client-Knoten und einem oder mehreren Server-Knoten zu fungieren, die Dienstinstanzen eines ersten Diensts ausführen, wobei das Verfahren Folgendes umfasst:
Empfangen einer ersten Dienstanforderung von dem Client-Knoten, die den ersten Dienst anfordert, und **dadurch gekennzeichnet, dass** das Verfahren ferner den folgenden Schritt umfasst:
Senden von Dienstinformationen an den Client-Knoten, wobei die Dienstinformationen eine Angabe der Dienstinstanzen des ersten Dienstes umfassen, die auf dem einen oder den mehreren Server-Knoten ausgeführt werden.

2. Verfahren nach Anspruch 1, wobei die Angabe der Dienstinstanzen des ersten Diensts folgende umfasst:
eine Angabe aller Dienstinstanzen des ersten Diensts und/oder
eine Angabe aller Sätze von Dienstinstanzen des ersten Diensts.

3. Verfahren nach Anspruch 1 oder 2, wobei der Schritt des Sendens von Dienstinformationen an den Client-Knoten in Reaktion auf den Schritt des Empfangens einer ersten Dienstanforderung von dem Client-Knoten ausgeführt wird.

4. Verfahren nach einem der Ansprüche 1 bis 3, wobei der Schritt des Sendens von Dienstinformationen an den Client-Knoten in Reaktion darauf ausgeführt, dass der erste SCP-Knoten nicht in der Lage ist, eine Dienstinstanz aus den Dienstinstanzen auszuwählen, um den ersten Dienst für den Client-Knoten bereitzustellen.

5. Verfahren nach einem der vorhergehenden Ansprüche, wobei:
der Schritt des Sendens von Dienstinformationen an den Client-Knoten Senden der Dienstinformationen in einer Dienstantwortnachricht umfasst; und
die Dienstinformationen der Dienstantwortnachricht hinzugefügt werden, falls es keine Location gibt, die eine Ressource identifiziert, die von einer Dienstinstanz des ersten Diensts für die Dienstantwortnachricht erstellt wurde, und die empfangene Anforderung sbi-target-apiroot nicht enthielt.

6. Verfahren nach einem der Ansprüche 1 bis 3, wobei die erste Dienstanforderung von dem Client-Knoten eine Angabe einer Teilmenge der Dienstinstanzen umfasst, die von dem ersten SCP-Knoten nicht ausgewählt werden sollten, um den Dienst für den Client-Knoten bereitzustellen; und
wobei der Schritt des Sendens von Dienstinformationen an den Client-Knoten in Reaktion darauf ausgeführt wird, dass der SCP-Knoten nicht in der Lage ist, eine Dienstinstanz auszuwählen, um den ersten Dienst für die Client-Knoten bereitzustellen, da alle der Dienstinstanzen des ersten Diensts in der Teilmenge des Dienstes als Dienstinstanzen angegeben sind, die von dem ersten SCP-Knoten nicht ausgewählt werden sollten, um den Dienst für den Client-Knoten bereitzustellen.

7. Verfahren nach Anspruch 6, wobei der Schritt des Sendens von Dienstinformationen an den Client-Knoten Senden einer Fehlernachricht an den Client-Knoten umfasst, wobei die Dienstinformationen in der Fehlernachricht umfasst sind.

8. Verfahren, das von einem Client-Knoten in einem Kommunikationsnetzwerk durchgeführt wird, wobei das Kommunikationsnetzwerk einen ersten Dienstkommunikationsproxy-Knoten, SCP-Knoten, umfasst, der dazu konfiguriert, als SCP zwischen einem Client-Knoten und einem oder mehreren Server-Knoten zu fungieren, die Dienstinstanzen eines ersten Diensts ausführen, wobei das Verfahren Folgendes umfasst:
Senden einer ersten Dienstanforderung an den ersten SCP-Knoten, die den ersten Dienst anfordert; und
**dadurch gekennzeichnet, dass** das Verfahren ferner den folgenden Schritte umfasst:
Empfangen von Dienstinformationen von dem ersten SCP-Knoten, wobei die Dienstinformationen eine Angabe der Dienstinstanzen des ersten Dienstes umfassen, die auf dem einen oder den mehreren Server-Knoten ausgeführt werden.

9. Verfahren nach Anspruch 8, wobei die Angabe der Dienstinstanzen des ersten Diensts folgende umfasst:
eine Angabe aller Dienstinstanzen des ersten Diensts und/oder
eine Angabe aller Sätze von Dienstinstanzen des ersten Diensts.

10. Verfahren nach Anspruch 8 oder 9, wobei die Dienstinformationen in einer Dienstantwortnachricht oder einer Fehlernachricht empfangen werden.

11. Verfahren nach einem der Ansprüche 8 bis 10, ferner umfassend:
Bestimmen aus den Dienstinformationen und aus Überlastungsinformationen, die in Reaktion auf frühere Dienstanforderungen erhalten werden, dass alle Dienstinstanzen des ersten Dienstes überlastet sind.

12. Verfahren nach Anspruch 11, ferner umfassend:
in Reaktion auf die Bestimmung, dass alle Dienstinstanzen überlastet sind:
Durchführen von Überlastungsminderung basierend auf Anforderungsdrosselung; und/oder
Blockieren von Verkehr von einer Benutzereinrichtung, UE.

13. Computerprogramm, umfassend Anweisungen, die bei Ausführung auf mindestens einem Prozessor den mindestens einen Prozessor zum Durchführen eines Verfahrens nach einem der vorhergehenden Ansprüche veranlassen.

14. Erster Dienstkommunikationsproxy-Knoten, SCP-Knoten, in einem Kommunikationsnetzwerk, wobei der erste SCP-Knoten dazu konfiguriert ist, als SCP zwischen einem Client-Knoten und einem oder mehreren Server-Knoten zu fungieren, die Dienstinstanzen eines ersten Diensts ausführen, wobei der erste SCP zum Durchführen des Verfahrens nach einem der Ansprüche 1 bis 7 ausgelegt ist.

15. Client-Knoten in einem Kommunikationsnetzwerk, wobei das Kommunikationsnetzwerk einen ersten Dienstkommunikationsproxy-Knoten, SCP-Knoten, umfasst, der dazu konfiguriert ist, als SCP zwischen einem Client-Knoten und einem oder mehreren Server-Knoten zu fungieren, die Dienstinstanzen eines ersten Diensts ausführen, wobei der Client-Knoten zum Durchführen des Verfahrens nach einem der Ansprüche 8 bis 12 ausgelegt ist.

## Revendications

1. Procédé réalisé par un premier nœud proxy de communication de service, SCP, dans un réseau de communication, dans lequel le premier nœud SCP est configuré pour fonctionner en tant qu'un SCP entre un nœud client et un ou plusieurs nœuds serveurs exploitant des instances de service d'un premier service, le procédé comprenant :
la réception d'une première demande de service depuis le nœud client, demandant le premier service ; et
**caractérisé en ce que** le procédé comprend en outre l'étape suivante :
l'envoi d'informations de service au nœud client, les informations de service comprenant une indication des instances de service du premier service qui fonctionnent sur le ou les nœuds serveurs.

2. Procédé selon la revendication 1, dans lequel l'indication des instances de service du premier service comprend :
une indication de toutes les instances de service du premier service ; et/ou
une indication de tous les ensembles d'instances de service du premier service.

3. Procédé selon la revendication 1 ou 2, dans lequel l'étape d'envoi d'informations de service au nœud client est réalisée en réponse à l'étape de réception d'une première demande de service depuis le nœud client.

4. Procédé selon l'une quelconque des revendications 1 à 3, dans lequel l'étape d'envoi d'informations de service au nœud client est réalisée en réponse à l'incapacité du premier nœud SCP de sélectionner une instance de service parmi les instances de service pour fournir le premier service au nœud client.

5. Procédé selon l'une quelconque des revendications précédentes, dans lequel :
l'étape d'envoi d'informations de service au nœud client comprend l'envoi des informations de service dans un message de réponse de service ; et
les informations de service sont ajoutées au message de réponse de service s'il n'y a pas d'emplacement identifiant une ressource créée par une instance de service du premier service pour le message de réponse et la demande reçue n'incluait pas sbi-target-apiroot.

6. Procédé selon l'une quelconque des revendications 1 à 3, dans lequel la première demande de service émanant du nœud client comprend une indication d'un sous-ensemble des instances de service qui ne devraient pas être sélectionnées par le premier nœud SCP pour fournir le premier service au nœud client ; et
dans lequel l'étape d'envoi d'informations de service au nœud client est réalisée en réponse à l'incapacité du premier nœud SCP de sélectionner une instance de service pour fournir le premier service au nœud client parce que toutes les instances de service du premier service sont indiquées dans le sous-ensemble des instances de service comme étant des instances de service qui ne devraient pas être sélectionnées par le premier nœud SCP pour fournir le service au nœud client.

7. Procédé selon la revendication 6, dans lequel l'étape d'envoi d'informations de service au nœud client comprend l'envoi d'un message d'erreur au nœud client, les informations de service étant comprises dans le message d'erreur.

8. Procédé réalisé par un nœud client dans un réseau de communication, le réseau de communication comprenant un premier nœud proxy de communication de service, SCP, configuré pour fonctionner en tant qu'un SCP entre le nœud client et un ou plusieurs nœuds serveurs exploitant des instances de service d'un premier service, le procédé comprenant :
l'envoi d'une première demande de service au premier nœud SCP, demandant le premier service ; et **caractérisé en ce que** le procédé comprend en outre l'étape suivante :
la réception d'informations de service depuis le premier nœud SCP, les informations de service comprenant une indication des instances de service du premier service qui fonctionnent sur le ou les nœuds serveurs.

9. Procédé selon la revendication 8, dans lequel l'indication des instances de service du premier service comprend :
une indication de toutes les instances de service du premier service ; et/ou
une indication de tous les ensembles d'instances de service du premier service.

10. Procédé selon la revendication 8 ou 9, dans lequel les informations de service sont reçues dans un message de réponse de service ou un message d'erreur.

11. Procédé selon l'une quelconque des revendications 8 à 10, comprenant en outre :
la détermination, à partir des informations de service et d'informations de surcharge obtenues en réponse à des demandes de service précédentes, que toutes les instances de service du premier service sont surchargées.

12. Procédé selon la revendication 11, comprenant en outre :
en réponse à la détermination que toutes les instances de service sont surchargées :
la réalisation d'une réduction de surcharge sur la base d'une limitation de demande ; et/ou
le blocage d'un trafic depuis un équipement utilisateur, UE.

13. Programme informatique comprenant des instructions qui, lorsqu'elles sont exécutées sur au moins un processeur, amènent l'au moins un processeur à réaliser un procédé selon l'une quelconque des revendications précédentes.

14. Premier nœud proxy de communication de service, SCP, dans un réseau de communication, dans lequel le premier nœud SCP est configuré pour fonctionner en tant qu'un SCP entre un nœud client et un ou plusieurs nœuds serveurs exploitant des instances de service d'un premier service, dans lequel le SCP est fonctionnel pour réaliser le procédé selon l'une quelconque des revendications 1 à 7.

15. Nœud client dans un réseau de communication, le réseau de communication comprenant un premier nœud proxy de communication de service, SCP, configuré pour fonctionner en tant qu'un SCP entre le nœud client et le ou les nœuds serveurs exploitant des instances de service d'un premier service, le nœud client étant fonctionnel pour réaliser le procédé selon l'une quelconque des revendications 8 à 12.
